# EUROPEAN PATENT APPLICATION

(11) **EP 2 712 696 A2**
(43) Date of publication of application: **02.04.2014**
(21) Application number: 13179398.6
(22) Date of filing: 06.08.2013
(51) Int. Cl.: B23K 11/14, B23K 11/18, B23K 11/00

(54) **Grid type article made of aluminium alloy and method of manufacturing thereof**

(30) Priority: 06.08.2012 PL 40025812
(71) Applicant: Progress Eco S.A., 28-147 Tuczepy (PL)
(72) Inventor: Sawicz, Józef, 26-021 Daleszyce (PL); Papkala, Hubert, 44-186 Giera towice (PL); Zajac, Krzysztof, 28-236 Rytwiany (PL)
(74) Representative: Karcz, Katarzyna

(57) **Abstract**

Aluminum alloy grating article and method of its manufacture, the aluminum alloy grating article being obtained by resistance projection welding of intersecting component elements (1, 4) provided with longitudinal welding projections (3, 5), the contact surfaces (S1 , S2 )of the welding projections (3, 5) of a pre-determined width and being free of aluminum oxides, and the welding projections (3, 5) of the component elements having a cross-section similar to a trapezoid with the ratio of the base lengths a/b ranging from about 0.25 to about 0.75 and the legs (c, d) being inclined at an angle ranging from about 20° to about 60°.

## Description

The object of the invention is an aluminum alloy grating article.

The object of the invention is also a method of manufacture of an aluminum alloy grating article.

The grating article according to the invention consists of intersecting longitudinal component elements which are manufactured of e.g. weldable aluminum alloys, mainly of the 5000 series. The 5000 series includes aluminum and magnesium alloys optionally including additional refining components, for example chrome. The grating article can, for example, be used in the industrial or residential construction industry products, in architectural projects, in household items and similar. The aluminum alloy grating article according to the invention may include gratings, nets, sieves, frames and other articles composed of intersecting longitudinal elements.

Presently, the aluminum grating articles like e.g. nets, are not manufactured by any welding methods of much technical significance. The reason for this are the physical and chemical properties of aluminum which is difficult to weld, such as low melting temperature, high thermal and electrical conductivity, high affinity of aluminum for oxygen resulting in forming aluminum oxide which features high electrical resistance and high melting temperature. Such characteristic has a detrimental influence on the welding process and the properties of the produced joints.

It is known that aluminum alloys having high technical and appearance advantages, such as lightness, good plastic, fatigue and resistance properties, high resistance to corrosion and excellent polishing capabilities, should be used for the production of numerous technical products which may be joined by an efficient and economic welding method.

Attempts to perform such welding, based on the known rules applied to spot welding or pressure butt welding have not brought positive results. Neither by welding elements that were entirely cleaned of aluminum oxides, nor by welding uncleaned elements, joints having required and repeatable resistance properties, tolerance and article appearance have been obtained.

The object of the invention is to remedy the drawbacks and imperfections of the known technical solutions related to aluminum alloy grating elements including nets.

Aluminum alloy grating article according to the invention is manufactured by resistance projection welding of intersecting component elements provided with longitudinal projections in the form of welding projections, the contact surfaces of the welding projections of a pre-determined width and being free of aluminum oxides and belonging to the central welding contact area, the welding projections of the component elements having a cross-section similar to a trapezoid with the ratio of the base lengths a/b ranging from about 0.25 to about 0.75 and the legs being inclined at an angle ranging from about 20° to about 60°.

Preferably, in one of the component elements, only the contract surfaces are free of aluminum oxides.

Preferably, the welded elements constitute bars.

Method of manufacture of the aluminum alloy grating article according to the invention includes pressing and resistance projection welding of intersecting aluminum component elements provided with longitudinal projections in the form of welding projections of a pre-determined width, the contact surfaces of the welding projections belonging to the central welding contact area being free of aluminum oxides, wherein the welding projections of the component elements have a cross-section similar to a trapezoid with the ratio of the base lengths a/b ranging from about 0.25 to about 0.75 and the legs being inclined at an angle ranging from about 20° to about 60°.

Preferably, the welded component elements are pressed pneumatically.

Preferably, the welded component elements are pressed mechanically.

Preferably, the component elements are welded with the use of direct current.

Preferably, the component elements are welded with the use of alternating current.

The type of joint obtained in the grating article according to the invention as a result of the welded surfaces having been cleaned of aluminum oxides, allows to produce the article having welds with very good resistance properties and small flash.

The grating article according to the invention has welds which are made by the projection resistance welding method. Such welding consists in locally heating up the material being joined by the heat generated as a result of a limited flow of electrical current, caused by the electrical resistance of the elements being welded. The welding used according to the invention is a kind of welding in a solid state, i.e. there is no melting of metal in the weld spot, but the joint results from a common crystallisation and diffusion of two intersecting elements heated up to a temperature below the liquidus. It was determined in course of microscope metallographic research that the aluminum elements being joined become welded in the solid state through the entire cross-section of the welding central contact area. The welding central contact area is the area in which the component elements of the grating article are welded.

The welding can be conducted both with the use of direct current and alternating current, with a pressure system, e.g. a mechanical or a pneumatic one.

An exemplary embodiment of the invention is shown in the appended drawing in which:
Fig.1 presents a side view of a fragment of the grating article according to the invention;
Fig.2 presents a top view of a fragment of the grating article according to the invention;
Fig. 3 presents a cross-section through the component elements before joining;
Fig. 4 presents a cross-section through the component elements before joining;
Fig.5 presents the distribution of the current flow lines and a cross-section of the joint being welded.

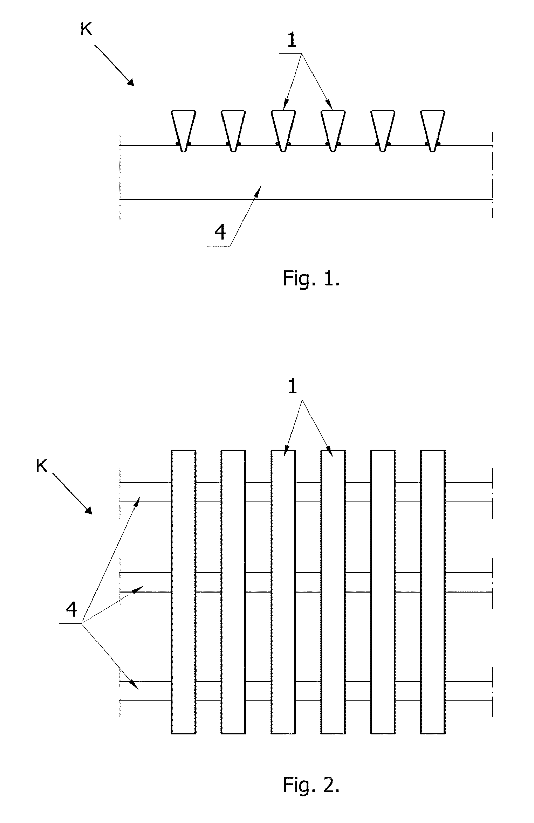

Fig. 1 shows a side view of an exemplary embodiment of the grating article K according to the invention, consisting of vertical and horizontal component elements 1, 4 in the form of intersecting bars which form the article K in the form of a grating. In the grating article according to the invention, the horizontal and the vertical component elements may be arranged with any density, depending on the requirements regarding the produced grating article. The component elements may constitute bars or profiles with any cross section.

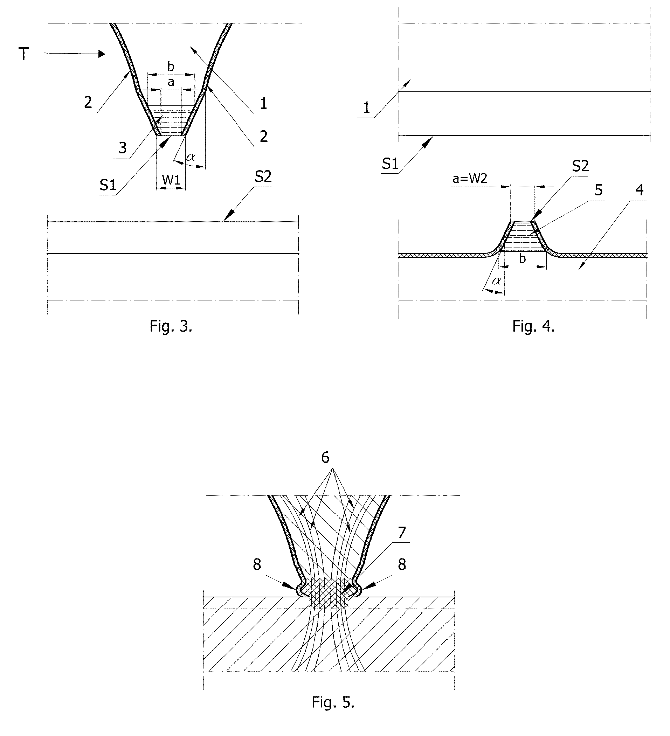

Fig. 3 and Fig. 4 show cross-sections of component the elements 1, 4 before welding. The component element 1, for example a bar, is provided with a projection 3 having a width W₁, the side surfaces of which are covered with aluminum oxides 2 whereas it is free of aluminum oxides on its surface S1. In the presented embodiment, the welding projections have a cross-section similar to a trapezoid with the ratio of the base lengths a/b equal to 0.45 and the legs inclined at an angle α equal to 30°. The angle α is an acute angle between each leg of the trapezoid and a line perpendicular to the bases of the trapezoid. In the embodiment shown, the projection 3 the surface of which is hatched in fig. 3, is located on a trapezoidal projection T. The projection T can have any shape and height resulting from the geometry of the required grating article and it can be located under the projections of the horizontal or vertical elements 1, 4. The element 4 is provided with a projection 5 having a width W₂, the surface S₂ of which is free of aluminum oxide. The remaining surface of one of the elements 1, 4 may, but not necessarily, be oxidised. It is however necessary that the remaining surface of at least one of the elements 1, 4 being joined is covered with aluminum oxides which enables the current flow and ensures proper heating up of the contact zone. Fig. 5 shows the weld 7 in the grating article K according to the invention. During welding the electrical current, indicated by lines 6, flows through the narrow cleaned contact zone having an area of a size close to the product (W₁*W₂), locally heating up the projections 3 and 5 in the middle of the weld. In this way, the heat is concentrated exactly in the welding spot, creating the weld 7 of high resistance properties and small mild flush. The increasing width of the projections from the dimension a to b eliminates the effect of splashing during welding, providing the article with esthetic appearance. The method according to the invention enables producing welds with very good resistance properties.

The aluminum alloy grating articles having the welding surface free of aluminum oxides can also be manufactured by welding aluminum elements having a circular cross-section. Such welding allows to produce a weld in case of small diameter elements. As a result of welding of such elements, a grating article is produced having lower mechanical resistance than the grating article formed of bars with welding projections, but articles of this kind can be used in cases where high mechanical resistance is not required.

## Claims

1. Aluminum alloy grating article comprising at least two intersecting longitudinal component elements (1) and (4) provided with a longitudinal welding projection (3, 5) each, the welding projections (3) and (5) having respective contact surfaces (S₁) and (S₂), the component elements (1) and (4) being connected with each other at their intersection points by resistance projection welding, the contact surfaces (S₁) and (S₂) of the welding projections (3) and (5) being free of aluminum oxides and having a pre-determined width (W₁) and (W₂) respectively, the welding projections (3) and (5) of the component elements (1) and (4) having before welding a trapezoid-like cross-section with two bases (a, b) and two inclined legs (c, d), the ratio of the base lengths a/b ranging from about 0.25 to about 0.75, and the legs (c, d) being inclined at an angle ranging from about 20° to about 60°.

2. Aluminum alloy grating article according to claim 1, **characterized in that** in one of the component elements (1, 4) only the contract surfaces (S₁, S₂) are free of aluminum oxides.

3. Aluminum alloy grating article according to claim 1 or 2, **characterized in that** welded elements (1, 4) constitute bars.

4. Method of manufacture of an aluminum alloy grating article comprising at least two intersecting longitudinal component elements (1) and (4) in which the component elements (1) and (4) are pressed and resistance projection welded against each other at their intersection points, the component elements (1) and (4) being provided with a longitudinal welding projection (3, 5) each, having respective contact surfaces (S₁) and (S₂) which are free of aluminum oxides and have a pre-determined width (W₁ and (W₂) respectively, the welding projections (3) and (5) of the component elements (1) and (4) having before welding a trapezoid-like cross-section with two bases (a, b) and two inclined legs (c, d) the ratio of the base lengths a/b ranging from about 0.25 to about 0.75, and the legs being inclined at an angle ranging from about 20° to about 60°.

5. Method according to claim 4, **characterized in that** the welded component elements (1) and (4) are pressed mechanically.

6. Method according to claim 4, **characterized in that** the welded component elements (1) and (4) are pressed pneumatically.

7. Method according to claim 4 or 5 or 6, **characterized in that** the component elements (1) and (4) are welded with the use of direct current.

8. Method according to claim 4 or 5 or 6, **characterized in that** the welded component elements (1) and (4) are welded with the use of alternating current.
